# EUROPEAN PATENT APPLICATION

(11) **EP 1 600 434 A1**
(43) Date of publication of application: **30.11.2005**
(21) Application number: 04717853.8
(22) Date of filing: 05.03.2004
(51) Int. Cl.: C04B 41/91, B01D 39/20, B01D 46/00, B01D 53/86, B01J 32/00, B01J 35/04

(54) **HONEYCOMB STRUCTURE AND METHOD OF PRODUCING THE SAME**

(30) Priority: 05.03.2003 JP 2003058243
(71) Applicant: NGK INSULATORS, LTD., Nagoya-City, Aichi Pref. 467-8530 (JP)
(72) Inventor: KATO, Shigeki, c/o Ngk Insulators, Ltd., Nagoya-shi, Aichi 4678530 (JP)
(74) Representative: Paget, Hugh Charles Edward
(86) International application number: PCT/JP2004/002832
(87) International publication number: WO 2004/078674

(57) **Abstract**

A honeycomb structure has a cell body with through channels and an outer peripheral wall of a thickness of 2.0 or less, thickness variation of 1.0 mm or less, and degree of circularity of 1.0 mm or less provided so as to surround the cell body. After producing a primary honeycomb body having through channels between partition walls, an outer peripheral wall of the primary honeycomb body and an outer peripheral portion of the body including part of partition walls are removed. Thereafter, a coating material is applied to exposed portions of partition walls whose outer peripheral portion has been removed, and then an outer peripheral wall is newly provided and the outer peripheral wall newly provided only is ground. The honeycomb structure has less variation in surface pressure distribution in canning, so that the honeycomb structure can be prevented from breaking during canning and has excellent thermal shock resistance.

## Description

### Technical Field

The present invention relates to a honeycomb structure in which a thickness of an outer peripheral wall is set to be uniform to improve a degree of circularity thereof, and a method for producing the honeycomb structure or the like.

### Background Art

In a large-sized honeycomb structure for use as a filter for purifying an exhaust gas, a catalyst carrier or the like, there has heretofore been a problem of deformation of the honeycomb structure: when a clay is extruded, cells around an outer peripheral wall collapse by their own weights, or a degree of circularity is reduced (see Japanese Utility Model Post-Examination Publication No. 7-183). In recent years, in the honeycomb structure, attempts have been intensively made to raise porosities of partition walls and reduce thicknesses of the walls in order to improve a purifying performance by reduction of a thermal capacity, reduction of a pressure loss, enhancement of a capturing efficiency or the like, and a strength of the honeycomb structure itself has tended to weaken. Therefore, the problem concerning the deformation of the honeycomb structure has been increasingly regarded as important.

As one of the attempts to solve this problem, the present applicant has heretofore proposed a method for producing a honeycomb structure, comprising the steps of placing into a cylindrical member a ceramic honeycomb body whose degree of circularity has been deteriorated (degree of circularity of 0.5 mm or more); pouring a slurry of cordierite into a gap between the ceramic honeycomb body and an inner periphery of the cylindrical member; and drying the slurry to dispose a coating layer further on an outer peripheral wall. Moreover, there has been proposed a honeycomb structure having a degree of circularity of 0.5 mm or less, which is obtained by the method (see the Japanese Utility Model Post-Examination Publication No. 7-183).

However, in the case of this producing method and the resultant honeycomb structure, a sufficient consideration has been not necessarily made on the point that a high thermal shock resistance is required since the structure is exposed at a remarkably high temperature, when used as the filter for purifying the exhaust gas, the catalyst carrier or the like. Especially, in the case that the honeycomb structure whose thickness has been reduced or whose porosity has been raised, the structure has not been sufficient in the thermal shock resistance.

That is, since the coating layer is disposed on the outer peripheral wall of the ceramic honeycomb body in this conventional honeycomb structure, there have also been problems that a portion obtained by both of the outer peripheral wall and the coating layer becomes very thick, a thermal capacity difference increases with respect to the partition walls having reduced thicknesses or raised porosities, and cracks and the like are easily generated in the vicinity of a boundary between both of the outer peripheral wall and the layer because of an increase of thermal stress. Additionally, since the coating layer has a non-uniform thickness, the coating layer itself has a thermal capacity difference between portions thereof having different thicknesses, and also in this respect, there has been a problem that the thermal shock resistance is reduced. Furthermore, this technique does not provide any solution to the point that the resistance to canning or the like of the honeycomb structure has been adversely influenced because of the deformation of the partition walls due to their own weights in the vicinity of the outer peripheral wall.

To solve this problem, the present applicant has further proposed a method for producing a ceramic honeycomb structure, comprising: a step of extruding, drying, and firing a ceramic clay to produce a fired ceramic honeycomb body; a step of processing a peripheral edge portion of this fired ceramic honeycomb body to remove the portion; and providing an outer peripheral wall on an outer peripheral surface of the fired ceramic honeycomb body after the processing (see Japanese Patent No. 2604876).

In this producing method, when "processing the peripheral edge portion of the fired ceramic honeycomb body to remove the portion", it is possible to improve the problem of the deformations of the partition walls or the outer peripheral wall by cell destruction or the like, and the enhancement can be expected in the thermal shock resistance by the reduction of the thickness of the outer peripheral wall.

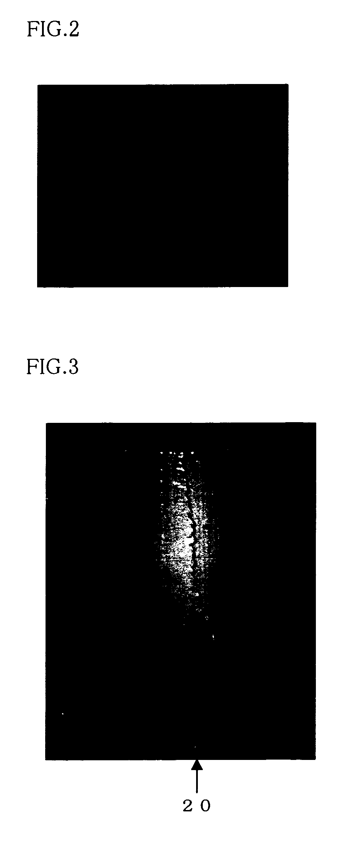

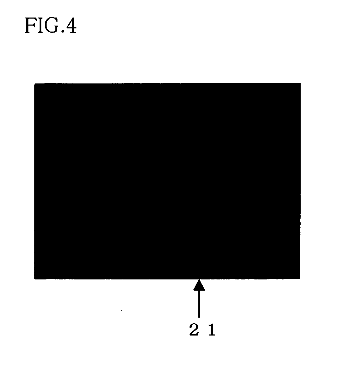

However, even in this producing method, it is not especially described that the thickness of the outer peripheral wall is set to be uniform. In actual, as shown in FIG. 3, in the conventional producing method, when the outer peripheral wall is newly provided, a convex portion referred to as a terminal end mark 20 is generated on the outer peripheral wall in the vicinity of a coating terminal end. Alternatively, as shown in FIG. 4, small irregular portions, observed as a vertically striped pattern 21, are generated based on a dry shrinkage difference in a whole periphery of the outer peripheral wall, and the degree of circularity of the resultant honeycomb structure has not been necessarily sufficient.

Therefore, the resultant honeycomb structure is grasped by part of the outer peripheral surface thereof at a canning time, and a large force is required for maintaining a desired canned state. It has been pointed out that the structure having the raised porosity or the thinned wall has a possibility that the outer peripheral wall or the partition wall is broken in a portion where a large force is locally applied, especially a convex portion. Furthermore, in the honeycomb structure obtained by this producing method, since there are still some variations in the thickness of the outer peripheral wall, room for improvement is still left with regard to the thermal shock resistance.

The present invention has been developed in view of the above-described problems, and a first object thereof is to provide a honeycomb structure in which fluctuations can be reduced in a surface pressure distribution at a canning time to prevent the structure from being broken at the canning time and which is also superior in thermal shock resistance. A second object of the present invention is to provide a method for producing a honeycomb structure which has such characteristics and which is provided with a uniformly thin outer peripheral wall and which is superior in degree of circularity.

### Disclosure of the Invention

That is, according to the present invention, there is provided a honeycomb structure provided with a cell body having a plurality of through channels and an outer peripheral wall provided so as to surround the cell body, and provided with a wall portion extending toward an outer peripheral portion of the honeycomb structure, wherein the outer peripheral wall envelopes the wall portion extending toward the outer peripheral portion of the honeycomb structure and is brought into close contact with partition walls on the outer peripheral portion side of the cell body positioned in an outermost portion in the cell body of the honeycomb structure; and the outer peripheral wall has a thickness of 2.0 mm or less, a thickness variation of 1.0 mm or less and a degree of circularity of 1.0 mm or less.

Here, in the present specification, "a thickness T of the outer peripheral wall" means a distance to an outer peripheral surface 4 from an end portion 3 of a wall portion 5 which exists continuously from each partition wall 2 of a honeycomb structure 1 and extending in an outer peripheral direction. The "degree of circularity" mentioned in the present specification means a maximum value among values calculated from measured values in accordance with an equation described later, the values being obtained by measuring diametric lengths of portions defined at each interval of 10 mm over a total length excluding opposite end portions each having a length of 10 mm.

In the present invention, a honeycomb structure having a degree of circularity of 0.5 mm or less is preferable, and a honeycomb structure having a degree of circularity of 0.1 mm or less is further preferable. The thickness of the outer peripheral wall is preferably 0.1 mm or more. The outer peripheral wall provided so as to surround the cell body may not be fired.

Furthermore, in the present invention, the honeycomb structure may be formed such that the plurality of through channels is plugged alternately at opposite end surfaces where the through channels open, and this honeycomb structure is preferably made of a ceramic.

Moreover, according to the present invention, there is provided a preferable method for producing such honeycomb structure, that is, a method for producing a honeycomb structure, comprising the steps of: preparing a primary honeycomb body having a plurality of through channels between partition walls; removing an outer peripheral wall of the primary honeycomb body and an outer peripheral portion including part of the partition walls; applying a coating material to exposed portions of the partition walls from which the outer peripheral portion has been removed; and newly providing an outer peripheral wall, wherein the newly provided outer peripheral wall only is ground.

It is to be noted that, in the present invention, a primary honeycomb structure is a term which means a fired or unfired honeycomb structure obtained usually by extruding and producing the honeycomb structure, or a fired or unfired honeycomb structure obtained by extruding the honeycomb structure using a die having a structure in which any outer peripheral wall is not disposed.

### Brief Description of the Drawings

FIG. 1 is an explanatory view schematically showing a thickness of an outer peripheral wall in a honeycomb structure of the present invention;
FIG. 2 is an enlarged photograph showing a surface state of the outer peripheral wall in the honeycomb structure obtained in Example 1;
FIG. 3 is a panoramic photograph showing the surface state of the outer peripheral wall in the honeycomb structure obtained in Comparative Example 1; and
FIG. 4 is an enlarged photograph showing the surface state of the outer peripheral wall in the honeycomb structure obtained in Comparative Example 1.

### Best Mode for Carrying out the Invention

An embodiment of the present invention will be described hereinafter specifically. Additionally, the present invention is not limited to or interpreted by the following description, and can be variously altered, modified, or improved based on knowledge of a person skilled in the art without departing from the scope of the present invention.

According to the present invention, there is provided a honeycomb structure provided with a cell body having a plurality of through channels and an outer peripheral wall provided so as to surround the cell body. A thickness of the outer peripheral wall is 2.0 mm or less, a thickness variation of the outer peripheral wall is 1.0 mm or less, and a degree of circularity is 1.0 mm or less, preferably 0.5 mm or less, further preferably 0.1 mm or less.

In the honeycomb structure of the present invention, since the thickness of the outer peripheral wall is 2.0 mm or less and very small, a thermal capacity of the outer peripheral wall is small, it is possible to reduce a thermal capacity difference from a thin wall or a partition wall having a high porosity, and a thermal shock resistance of the whole structure can be enhanced. On the other hand, considering a strength of the outer peripheral wall and a gas leakage, the thickness of the wall is preferably 0.1 mm or more.

Moreover, in the honeycomb structure of the present invention, since the thin outer peripheral wall has a remarkably uniform thickness to such an extent that the thickness variation is 1.0 mm or less, and the whole structure has an excellent degree of circularity of 1.0 mm or less, there is hardly a thermal capacity difference between portions of the outer peripheral wall, concentration of a local thermal stress is reduced in the outer peripheral wall, and the thermal shock resistance of the structure can be enhanced also from this respect.

Additionally, when the thickness variation of the outer peripheral wall and the degree of circularity are set within predetermined ranges, the present invention is useful in the honeycomb structure in which fluctuations of a surface pressure distribution at a canning time are reduced, local destructions at the canning time are reduced, and especially the thicknesses of the walls are reduced or porosities of the partition walls are raised.

In the present invention, when conditions of the above-described producing method of the present invention are controlled within desired ranges, it is possible to produce a honeycomb structure in which the thickness of the outer peripheral wall is 2.0 mm or less, the thickness variation of the outer peripheral wall is 1.0 mm or less, and the degree of circularity is 1.0 mm or less. Consequently, the thermal shock resistance or canning properties can be preferably further enhanced.

Moreover, when the plurality of through channels are plugged alternately each other at opposite end surfaces where the through channels open, the honeycomb structure can be formed into a honeycomb filter which is superior in the thermal shock resistance and the canning properties. When desired catalyst active metals are carried in the partition walls, the structure can be formed into a honeycomb catalyst which is superior in the thermal shock resistance and the canning properties.

Furthermore, when the structure is used as the honeycomb filter or the honeycomb catalyst, the structure is preferably made of a ceramic. Examples of the ceramic constituting the honeycomb structure include silicon carbide, mullite, cordierite and the like.

Additionally, in the present invention, there is not any special limitation as to respects other than the above-described respects, such as properties of a cell structure or the like of the honeycomb structure. Examples of a sectional shape of the cell structure of the honeycomb structure include circle, ellipse, triangle, quadrangle, hexagon and the like.

Next, a method for producing a honeycomb structure according to the present invention will be described.

In the producing method of the present invention, after preparing a primary honeycomb body having a plurality of through channels, an outer peripheral wall of the primary honeycomb body and an outer peripheral portion including part of the partition walls are removed. Next, a coating agent is applied to exposed portions of the partition walls, from which the outer peripheral portion of the honeycomb structure has been removed, to provide an outer peripheral wall newly. Furthermore, the surface of the newly provided outer peripheral wall of the honeycomb structure is ground.

Consequently, since the resultant honeycomb structure can be provided with the very thin outer peripheral wall having a small thermal capacity, a thermal capacity difference is reduced between the thin partition wall having a high porosity and a small thermal capacity, and the outer peripheral wall, and the thermal shock resistance of the honeycomb structure can be enhanced. After removing the outer peripheral portion of the primary honeycomb body once, the outer peripheral wall is provided again. Therefore, the deformed partition walls can be removed in the vicinity of the outer peripheral wall, a problem of a degree of circularity is reduced by a firing shrinkage or the like can be also completely prevented, and a resistance to canning can be enhanced in the honeycomb structure.

Furthermore, in the present invention, since the newly provided outer peripheral wall is ground, a comparatively large convex portion referred to as a coating terminal end mark is removed from the outer peripheral wall, or a small irregular portion observed as a vertically striped pattern is removed from a whole outer periphery, and the honeycomb structure having a smooth outer peripheral wall can be produced. Therefore, it is possible to produce the honeycomb structure having the uniformly thin outer peripheral wall and a high degree of circularity with a high production efficiency. Cylindrical properties required in the honeycomb body are also enhanced by machining. This will be described hereinafter specifically.

Examples of the primary honeycomb body in the present invention usually include: a primary honeycomb body provided with a cell body having a plurality of through channels between partition walls, and a preliminary outer peripheral wall provided in a periphery of the cell body, and the honeycomb body can be prepared in a certain method such as extruding.

Moreover, examples of a raw material of the primary honeycomb body include a material containing a ceramic, a metal or the like as a main component. If necessary, the raw material may be mixed with a certain additive. In the present invention, the raw material may be subjected to necessary steps such as drying and firing steps after a forming step in accordance with the raw material or the like.

In the present invention, as means for removing the outer peripheral portion of the primary honeycomb body, a vertical or horizontal type cylindrical grinding machine or the like is usually used.

In the present invention, the step of removing the outer peripheral portion of the primary honeycomb body is performed for a purpose of removing the partition walls which have cell destructions or which are deformed otherwise, and the deformed partition walls are preferably securely removed together with the outer peripheral wall.

In the present invention, examples of a grinding tool for removing the outer peripheral portion from the primary honeycomb body and a grinding tool for grinding the surface of the newly provided outer peripheral wall include grinding tools having abrasive wheels, chips or the like. It is preferable to use the grinding tool which does not have any problem of breakage of the honeycomb structure and which has the abrasive wheel because a desired dimensional precision is obtained.

In the present invention, there is not any special limitation as to a method of applying the coating agent to the exposed portions of the partition walls of the honeycomb structure from which the outer peripheral portion has been removed, to provide the outer peripheral wall newly. Examples of the method include a method of aligning a central axis of the honeycomb structure, from which the outer peripheral portion has been removed, with that of a rotary base to dispose to fix the structure. Next, a coating material is supplied to the exposed portions of the partition walls of the honeycomb structure while rotating the rotary base so that the outer peripheral wall is provided.

### (Examples)

The present invention will be hereinafter described more specifically in accordance with examples, but the present invention is not limited to these examples.

### (Example 1)

Water and binder were added to a raw material for forming cordierite, and kneaded to prepare a columnar clay in a vacuum kneading machine. This clay was injected into an extruding machine, and passed through a die having a desired shape to prepare a formed honeycomb body. At this time, a stress was concentrated on the surface of the formed honeycomb body brought into contact with a receiving base because of a weight of the body, and partition walls of about two cells from an outer peripheral surface were deformed. Next, after dielectrically drying the formed honeycomb body, opposite end portions were cut, films were attached to the opposite end surfaces, and holes were made in the films in checkered patterns by laser. Next, a slurry having a desired viscosity was inserted by a pressing machine, and dried, and through channels were plugged alternately each other at the opposite end surfaces where the holes opened. Furthermore, the body was fired at 1430°C for five hours to obtain a primary honeycomb body having an outer diameter of 160 mm x a length of 200 mm, a partition wall thickness of 0.304 mm, and a cell density of 46.5 cells/cm².

Next, the resultant primary honeycomb body was laid in a position where the partition walls of about two cells deformed in the forming step could be removed, and an outer peripheral wall and an outer peripheral portion including part of the partition walls were mechanically removed by a lathe. Exposed portions of partition walls from which the outer peripheral portion was removed were coated with a coating material, and a 2.5 mm outer peripheral wall was newly provided.

Finally, the honeycomb body was laid in a position where the outer peripheral wall could be worked into a thickness of 1 mm, the body was ground using an abrasive wheel #80 on conditions that an abrasive wheel rotary speed was 2250 rpm, an abrasive wheel feeding speed was 6 mm/sec, and a honeycomb rotation speed was 80 rpm, and a honeycomb structure was obtained.

### (Comparative Example 1)

A honeycomb structure was obtained in the same manner as in Example 1 except that a coating thickness was set to 1.5 mm, and a fired material provided with a newly provided outer peripheral wall was not polished.

### (Evaluation Method)

The honeycomb structures obtained in Example 1 and Comparative Example 1 as described above were evaluated by the following method. It is to be noted that solid photographs of honeycomb bodies were taken in order to inspect states of the surfaces of the honeycomb structures obtained in Example 1 and Comparative Example 1, and the photographs are shown in FIGS. 2, 3, and 4.

### (1) Thickness of Outer Peripheral Wall and Coating Thickness Variation

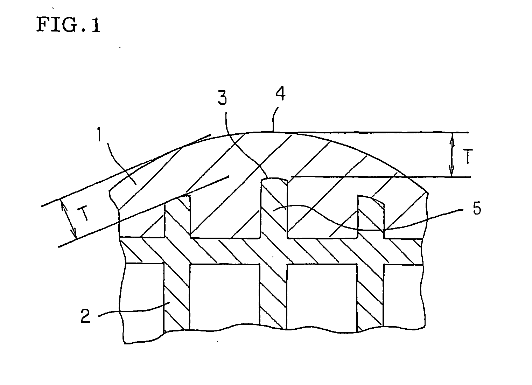

After ending measurement of a surface pressure distribution on the outer peripheral wall at a canning time, and a test on thermal shock resistance, the honeycomb structure was used as a sample in measuring the thickness of the outer peripheral wall. After cutting each of opposite end portions of the honeycomb structure by a length of 10 mm along an axial direction, the structure was cut at an interval of 10 mm vertically with respect to the axial direction. In a cut surface of each cut piece, a length was measured between an outer peripheral surface 4, and an end portion 3 of an outer peripheral direction of a wall portion 5 protruding toward the outer peripheral portion shown in FIG. 1 using a microscope (manufactured by Nikon Corp.), and the length was obtained as the thickness of the outer peripheral wall of the corresponding portion. The thickness of the outer peripheral wall was represented by an average value of thicknesses in measured positions.

It is to be noted that among the measured values obtained as a result of the measurement of the measured sections, maximum and minimum values were specified, and a difference between the values was obtained as a coating thickness variation.

### (2) Degree of circularity

As described above, the degree of circularity was defined as "maximum diameter-minimum diameter/2". A diametric length of each portion was measured at an interval of 10 mm over a total length of the portion of the honeycomb structure from which the opposite ends each having a length of 10 mm were removed in the axial direction by a commercially available laser displacement meter. The degree of circularity of each section was obtained by the above-described equation, and among the measured values, the maximum value was obtained as the degree of circularity of the outer peripheral wall.

### (3) Distribution of Surface Pressure applied on Outer Peripheral Wall at Canning Time

As to the honeycomb structures obtained in Example 1 and Comparative Example 1, each honeycomb structure was inserted into a cylindrical jig, to whose inner surface a pressure sensor sheet was attached, via a mat having a thickness of 2.5 mm, and a pressure distribution was measured. An inner diameter of the cylindrical jig of Example 1 was set to be equal to that of Comparative Example 1.

### (4) Thermal shock resistance

The honeycomb structures obtained in Example 1 and Comparative Example 1 were left to stand in an electric furnace in a high-temperature atmosphere at 600°C for 30 minutes, and thereafter taken out in a room-temperature (20°C) atmosphere to confirm presence of cracks generated in the outer peripheral wall with naked eyes.

### (Evaluation Results)

In the honeycomb structure of Comparative Example 1, the thickness of the outer peripheral wall was 1.5 mm, the outer peripheral wall thickness variation (coating thickness variation) was 1.2 mm, and the degree of circularity was 1.2 mm. As shown in FIGS. 3 and 4, irregularities were observed on the surface of the outer peripheral wall, and there were large fluctuations in the surface pressure distribution of the outer peripheral wall at the canning time. Further in the test on the thermal shock resistance, cracks were observed in the vicinity of a coating terminal end mark.

On the other hand, in the honeycomb structure of Example 1, the thickness of the outer peripheral wall was 1.5 mm, the outer peripheral wall thickness variation was 0.1 mm, and the degree of circularity was 0.05 mm. As shown in FIG. 2, the irregularities were hardly observed on the surface of the outer peripheral wall, and there were small fluctuations of the surface pressure distribution of the outer peripheral wall at the canning time. In the test on the thermal shock resistance, any crack was not observed in the outer peripheral wall.

**(Table 1)**

| | Dimensional precision | | | Evaluation | |
|---|---|---|---|---|---|
| | Degree of circularity | Smoothness | Coating thickness variation | Canning properties | Thermal shock resistance |
| Ex.1 | 0.05mm | Smooth | 0.1 mm | Small surface pressure distribution | Satisfactory |
| C.E.1 | 1.2 mm | Irregularities are present | 1.2 mm | Large surface pressure distribution | Large crack in thickened portion |

### (Examples 2 to 12, Comparative Examples 2 to 10)

Cell shapes, cell densities, cell wall thicknesses (thicknesses of partition walls), and outer peripheral wall thickness were variously changed as shown in Table 2, and a honeycomb structure having an outer diameter of 356 mm x a length of 356 mm was obtained in a method similar to that of Example 1 described above.

The resultant honeycomb structures were evaluated in the same manner as in Example 1. Results are shown in Table 2.

### (Evaluation Results)

In Table 2, a value of maximum surface pressure/minimum surface pressure is taken as a canning surface pressure distribution. When the value was 1.5 or less, the distribution was evaluated as satisfactory. When this value exceeded 1.5, fluctuations of surface pressures increased, and therefore there was an increasing possibility that the honeycomb structure was broken at a canning time.

As to the honeycomb structures of Comparative Examples 2 to 10, thicknesses of outer peripheral walls were 1 to 3 mm, outer peripheral wall thickness variations (coating thickness variations) were 1 to 1.5 mm, and degree of circularities were 1.1 to 2 mm. Stepped portions were observed on the surfaces of the outer peripheral walls, and most of the surface pressure distributions of the outer peripheral walls at the canning time exceeded 1.5 and indicated large values. In a test on thermal shock resistance, cracks were generated in outer peripheries of many structures.

On the other hand, as to the honeycomb structures of Examples 2 to 12, thicknesses of outer peripheral walls were 1 to 2 mm, outer peripheral wall thickness variations (coating thickness variations) were 0.2 to 1 mm, and degree of circularities were 0.05 to 1 mm. Any stepped portion was not observed on the surfaces of the outer peripheral walls, and the surface pressure distributions of the outer peripheral walls at the canning time indicated 1.5 at maximum. Most of the distributions indicated values less than the maximum value. In the test on thermal shock resistance, any crack was not observed in the outer peripheral walls.

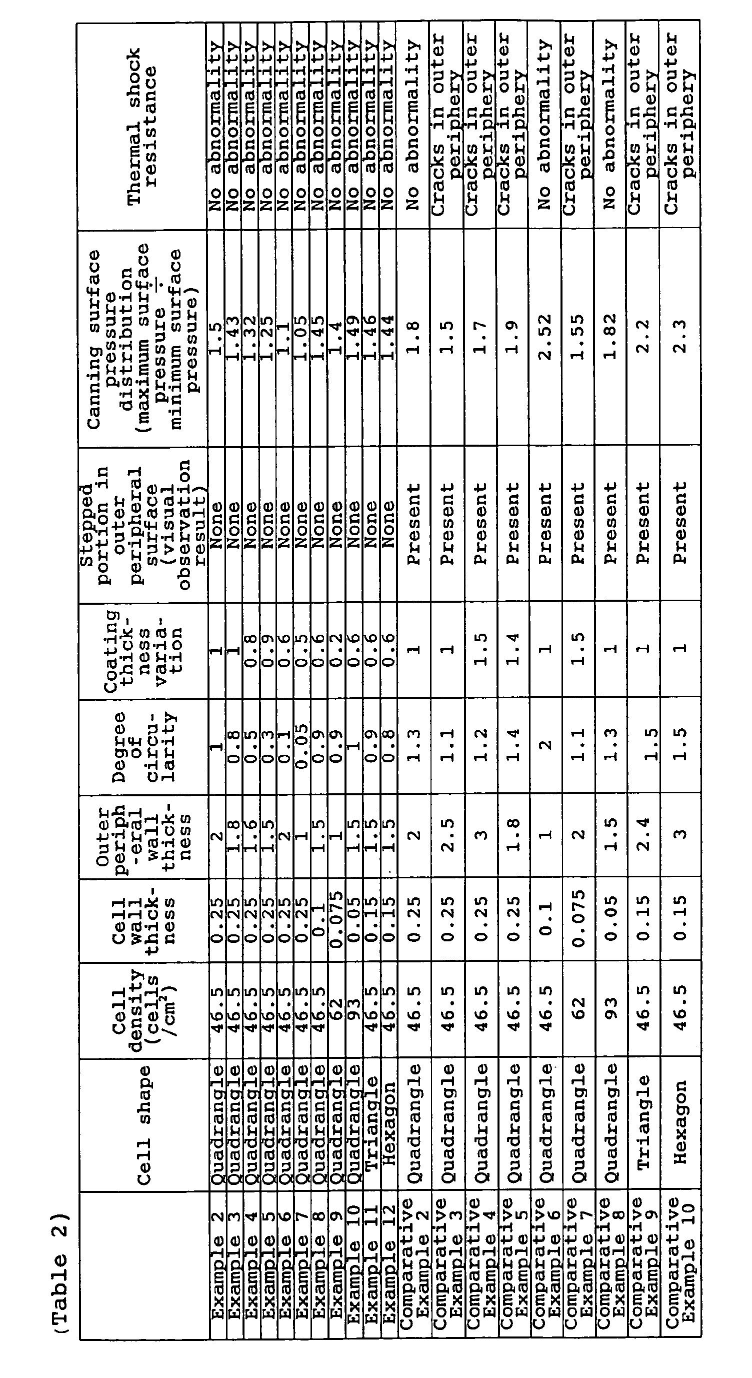

### Industrial Applicability

As described above according to the present invention, there can be provided a honeycomb structure in which a preferable canned state can be maintained by enhancement of a degree of circularity and which is superior in thermal shock resistance. There can be provided a method capable of producing a honeycomb structure provided with a uniformly thin outer peripheral wall which can exert such characteristics, and having a high degree of circularity. Therefore, the honeycomb structure of the present invention can be preferably used as a filter for purifying an exhaust gas, a catalyst carrier or the like.

## Claims

1. A honeycomb structure provided with a cell body having a plurality of through channels and an outer peripheral wall provided so as to surround the cell body, and provided with wall portion extending toward an outer peripheral portion of the honeycomb structure,
wherein the outer peripheral wall envelopes the wall portion extending toward the outer peripheral portion of the honeycomb structure and is brought into close contact with partition walls on the outer peripheral portion side of the cell body positioned in an outermost portion in the cell body of the honeycomb structure; and the outer peripheral wall has a thickness of 2.0 mm or less, a thickness variation of 1.0 mm or less and a degree of circularity of 1.0 mm or less.

2. The honeycomb structure according to claim 1, wherein the degree of circularity is 0.5 mm or less.

3. The honeycomb structure according to claim 1, wherein the degree of circularity is 0.1 mm or less.

4. The honeycomb structure according to any one of claims 1 to 3, wherein the thickness of the outer peripheral wall is 0.1 mm or more.

5. The honeycomb structure according to any one of claims 1 to 4, wherein the outer peripheral wall is unfired.

6. The honeycomb structure according to any one of claims 1 to 5, wherein the plurality of through channels are plugged alternately each other at opposite end surfaces where the through channels open.

7. The honeycomb structure according to any one of claims 1 to 6, which is made of a ceramic.

8. A method for producing a honeycomb structure, comprising the steps of: preparing a primary honeycomb body having a plurality of through channels between partition walls; removing an outer peripheral wall of the primary honeycomb body and an outer peripheral portion including part of the partition walls; applying a coating material to exposed portions of the partition walls from which the outer peripheral portion has been removed; and newly providing an outer peripheral wall, wherein the newly provided outer peripheral wall only is ground.
